# EUROPEAN PATENT SPECIFICATION

(11) **EP 2 434 506 B1**
(45) Date of publication and mention of the grant of the patent: **03.05.2017**
(21) Application number: 10777283.2
(22) Date of filing: 22.03.2010
(51) Int. Cl.: H01G 4/32, H01G 2/16, H01G 4/015, H01G 4/18, H01G 4/224, H01G 4/236

(54) **SELF-HEALING CAPACITOR WITH SAFETY PROTECTION MEANS**
SELBSTREPARIERENDER KONDENSATOR MIT SICHERHEITSSCHUTZMITTELN
CONDENSATEUR À AUTO-RÉGÉNÉRATION À MOYEN DE PROTECTION DE SÉCURITÉ

(30) Priority: 21.05.2009 CN 200910098690
(43) Date of publication of application: 28.03.2012
(73) Proprietor: Liu, Guoguang, Ningbo, Zhejiang 315206 (CN)
(72) Inventor: Liu, Guoguang, Ningbo, Zhejiang 315206 (CN)
(74) Representative: Roberts, Peter David
(86) International application number: PCT/CN2010/000342
(87) International publication number: WO 2010/133079

(56) References cited:
- CN-A- 101 339 846
- CN-A- 101 339 846
- CN-A- 101 567 262
- CN-U- 87 201 134
- CN-U- 87 201 134
- CN-Y- 2 911 911
- US-A- 4 791 529
- US-A- 4 791 529

## Description

### Field of the invention

The present invention relates to the field of the capacitor, in particular, to a kind of self-healing capacitor with safety protection means.

### Description of the Prior Art

US4791529 discloses a protective system to prevent a dry metallized film capacitor from rupturing its case or catching fire in the event that an internal short or fault occurs within the capacitor section utilizes a fuse and a thermal protector connected in series with the capacitor section and within its case. The fuse serves to protect the unit from a fault-induced low resistance high current in-rush, while the thermal protector is triggered by a fault-induced high resistance low current. A heat reflective circumferential sheet and the positioning of thermal protector maximize its value in the protective system

Capacitors have been applied to a wide range, yet many of the current capacitors share the similar structure, which are lack of protection for excessive fault current as stated as follows:

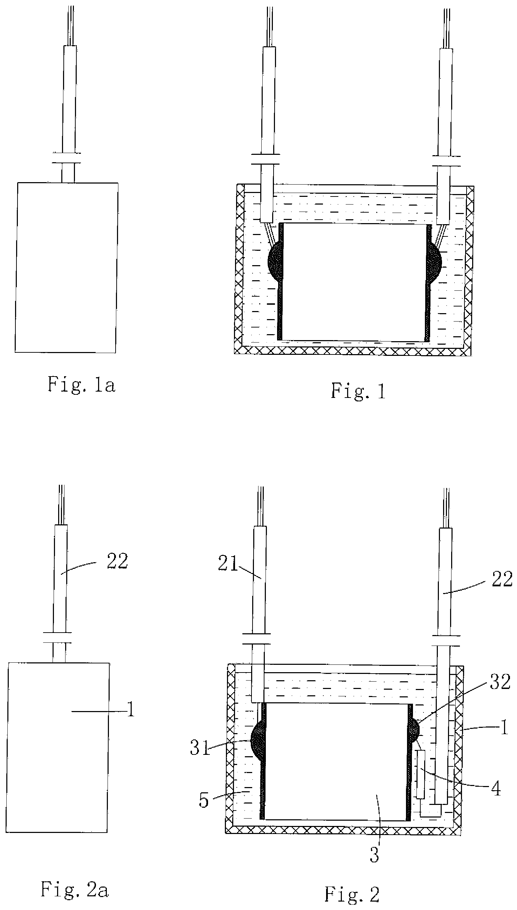

Fig.1 and Fig.1a show a Prior Art I of the capacitor, which is composed of the metallized polypropylene film, flame retardant or non-flame retardant epoxy resin, the flame retardant or non-flame retardant plastic and the metal casing, and the leading-out terminal, with no protector and called PO non-special fault protection capacitor; due to the lack of safety protector, it can no longer accord with the production and living circumstance themed as safety, environmental friendliness, and green.

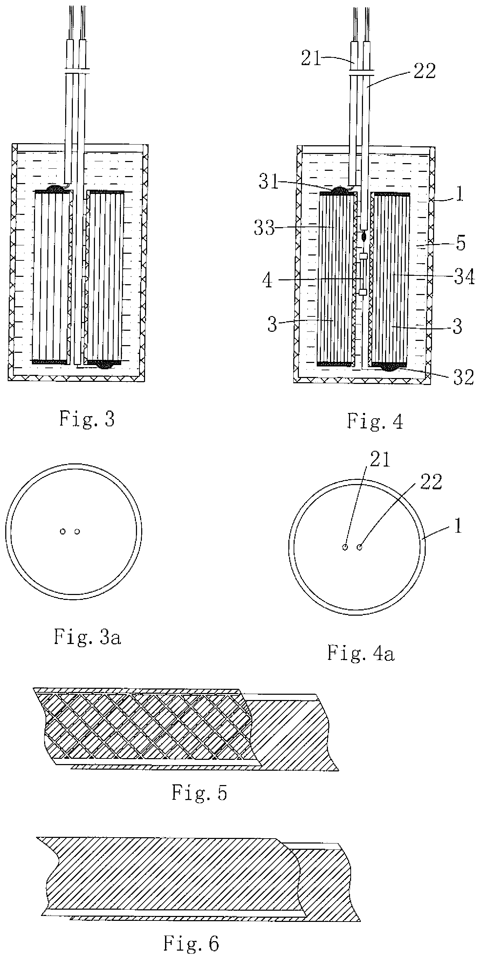

Fig.3 and Fig.3a show a Prior Art II of the capacitor, which is also composed of the metallized polypropylene film, flame retardant or non-flame retardant epoxy resin, the flame retardant or non-flame retardant plastic and the metal casing, and the leading-out terminal, with no protector and also called PO non-special fault protection capacitor; due to the lack of safety protector, it can no longer accord with the production and living circumstance themed as safety, environmental friendliness, and green.
Fig.5 shows a Prior Art III of a safety film capacitor, which comprises the metallized polypropylene film in special overlapping curves or diamond shape, the flame retardant epoxy resin, the flame retardant plastic or metal casing, and the leading-out terminal. It has protection function under that, when the polypropylene film steams the metallic coating, many separate, standard metal blockages come into being with tiny metal straps among the blockages as the linkage. These tiny metal straps function as fuses. Such capacitor is called P2 capacitor with safety grade. The safety film capacitor requires sophisticated craftsmanship and high costs in the process of manufacturing the metallic coating, and the tiny metal straps break easily during the normal self-healing of the capacitor, which causes large losses of capacity.
Fig.6 shows a Prior Art IV of a safety film capacitor. Just as its name implies, the safety film refers to safety. However, the application rate of the safety film is unsatisfactory. Measured in square areas, the application rate of the safety film for producing capacitors is generally 85% of that of normal films. With increased costs of raw materials, supplement materials, and manufacturing, general supporting facility factories can hardly purchase the anti-explosion capacitors made with the above said safety film.

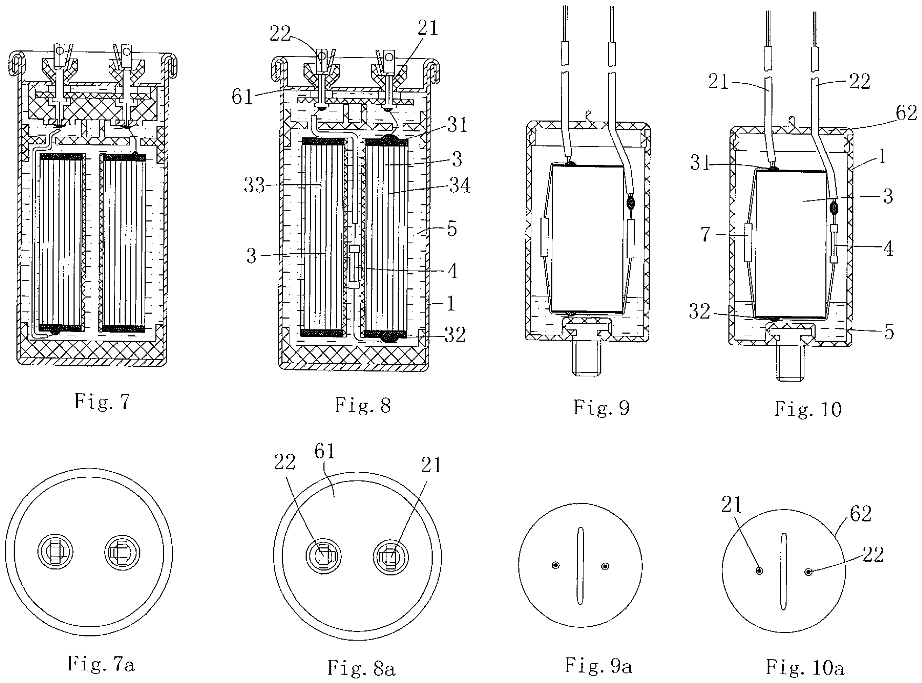

Fig.7 and Fig.7a show a Prior Art V of the capacitor, which comprises the metallized polypropylene film, relevant components of capacitors for salad oil or castor oil, the metal casing, and the leading-out terminal. The capacitor is connected with anti-explosion pieces, tiny square irons, and recombination lines to be an anti-explosion device, called P1 capacitor with safety grade. Such capacitor secures the safety to some extent, but is high in costs of raw materials, supplement materials, and manufacturing.
Fig.9 and Fig.9a show a Prior Art VI of the capacitor. The capacitor comprises the metallized polypropylene film, the flame retardant or non-flame retardant epoxy resin, the flame retardant or non-flame retardant plastic or metal casing, the leading-out terminal, the resistance, and the thermal fuse, called lamp capacitor with thermal protector. The capacitor, with the thermal protector as the protection device, is low in the costs of raw materials and processing. However, after numerous tests, such capacitor has following disadvantages due to the thermal protector as the protection device:

Since the thermal protector plays its role according to the temperature, that is, it will perform the protection function only when the interior temperature exceeds the rated temperature of the thermal protector, while it's difficult to position the thermal protector at the exact overheated point, therefore, when the temperature of the capacitor is rising and the capacitor would explode, the thermal protector may not be in the right place. Although such capacitor is economical, it's hard to secure the safety.

### Summary of the invention

It is an object of the present invention to provide a self-healing capacitor with safety protection means, which is low in the cost, simple in the workmanship, convenient in the operation, agile in the action, rapid in the protection, efficient in the energy consumption, and friendly to the environment.

For achieving the above stated object, a self-healing capacitor with safety protection means according to the invention is defined by the features of claim 1. It comprises:
a casing which is made of flame retardant plastic or metal;
characterized in that a capacitor core wound with metallized polypropylene film is encapsulated in the casing;
flame retardant epoxy resin is filled between the capacitor core and the casing;
a first electrical contact and a second electrical contact are respectively provided on the upper end and the lower end of the capacitor core, the second electrical contact is electrically connected to a current fuse which is electrically connected to a second leading-out, and the first electrical contact is electrically connected to a first leading-out.
The capacitor core wholly in a hollowed column is composed of a hollowed left semicircular column and a hollowed right semicircular column, the first electrical contact is formed on top of the left semicircular column and the second electrical contact is formed on the bottom of the right semicircular column, the current fuse is disposed in the hollowed cavity of capacitor core. The first cover is inserted on the top of the casing, the first leading-out and the second leading-out both run through the first cover.

As a preference, two electrodes of a discharge resistance are respectively connected to the first electrical contact and the second electrical contact, a second cover is inserted on the top of the casing, the first leading-out and the second leading-out both run through the second cover.

As a preference, at the moment that the capacitor core comes up with severe self-healing discharge or thermal breakdown in the operation, the current fuse will burn out immediately and break the power supply circuit of the capacitor core due to the instant impulse current.

Compared with the prior art, in the present invention, a capacitor core wound with metallized polypropylene film is encapsulated in the casing, flame retardant epoxy resin is filled between the capacitor core and the casing; a first electrical contact and a second electrical contact are respectively provided on the upper end and the lower end of the capacitor core, the second electrical contact is electrically connected to a current fuse which is electrically connected to a second leading-out, and the first electrical contact is electrically connected to a first leading-out.

And in the present invention, a mini current fuse is used for protection, and the current fuse matches with the value of the capacity current accurately, it can make the current fuse keep operating normally when the production is in test and in normal operation. At the moment that the capacitor core comes up with severe self-healing discharge or thermal breakdown in the operation, the current fuse will burn out immediately and break the power supply circuit of the capacitor core due to the instant impulse current. Therefore, it can avoid explosions and accidents arising caused by the enlargement of the failure point, and errors will not occur due to the changes of the temperature in the operation. The current fuse will only operate for protection at the instant when an error occurs inside the capacitor which damages the insulation and increases the current.

### Brief Description of the Drawings

FIG.1 is a sectional view of a capacitor of Prior Art 1.
FIG.1a is a left side view of the capacitor of Prior Art 1.
FIG.2 is a sectional view of a capacitor in accordance with the first embodiment of the present invention.
FIG.2a is a left side view of the capacitor in accordance with the first embodiment of the present invention.
FIG.3 is a sectional view of a capacitor of Prior Art 2.
FIG.3a is a top plan view of the capacitor of Prior Art 2.
FIG.4 is a sectional view of a capacitor in accordance with the second embodiment of the present invention.
FIG.4a is a top plan view of the capacitor in accordance with the second embodiment of the present invention.
FIG.5 is a sectional view of a capacitor of Prior Art 3.
FIG6 is a sectional view of a capacitor of Prior Art 4.
FIG.7 is a sectional view of a capacitor of Prior Art 5.
FIG.7a is a top plan view of the capacitor of Prior Art 5.
FIG.8 is a sectional view of a capacitor in accordance with the third embodiment of the present invention.
FIG.8a is a top plan view of the capacitor in accordance with the third embodiment of the present invention.
FIG.9 is a sectional view of a capacitor of Prior Art 6.
FIG.9a is a top plan view of the capacitor of Prior Art 6.
FIG.10 is a sectional view of a capacitor in accordance with the forth embodiment of the present invention.
FIG.10a is a top plan view of the capacitor in accordance with the forth embodiment of the present invention.

### Detailed Description of the Preferred Embodiment

To enable a further understanding of the innovative and technological content of the invention herein refer to the detailed description of the invention and the accompanying drawings below:
In FIG.1 ∼ FIG.10a, the reference number in the drawings with the name of element is list as below: a casing 1, a first leading-out 21, a second leading-out 22, a capacitor core 3, the first electrical contact 31, the second electrical contact 32, the left semicircular column 33, the right semicircular column 34, a current fuse 4, flame retardant epoxy resin 5, a first cover 61, a second cover 62, a discharge resistance 7.
FIG.2 and FIG.2a show a first preferred embodiment of the present invention, the self-healing capacitor with safety protection means comprises:
   a casing 1 which is made of flame retardant plastic or metal;
   a capacitor core 3 wound with metallized polypropylene film is encapsulated in the casing 1 sealed with flame retardant epoxy resin 5, that is, flame retardant epoxy resin 5 is filled between the capacitor core 3 and the casing 1;
   a first electrical contact 31 and a second electrical contact 32 are respectively provided on the upper end and the lower end of the capacitor core 3, the second electrical contact 32 is electrically connected to a current fuse 4 which is electrically connected to a second leading-out 22, and the first electrical contact 31 is electrically connected to a first leading-out 21.
FIG.4 and FIG.4a show a second preferred embodiment of the present invention, the self-healing capacitor with safety protection means comprises:
   a casing 1 which is made of flame retardant plastic or metal;
   a capacitor core 3 wound with metallized polypropylene film is encapsulated in the casing 1;
   flame retardant epoxy resin 5 is filled between the capacitor core 3 and the casing 1;
   a first electrical contact 31 and a second electrical contact 32 are respectively provided on the upper end and the lower end of the capacitor core 3, the second electrical contact 32 is electrically connected to a current fuse 4 which is electrically connected to a second leading-out 22, and the first electrical contact 31 is electrically connected to a first leading-out 21.

The capacitor core 3 is wholly in a hollowed column, and is composed of a hollowed left semicircular column 33 and a hollowed right semicircular column 34, the first electrical contact 31 is formed on top of the left semicircular column 33 and the second electrical contact 32 is formed on the bottom of the right semicircular column 34, the current fuse 4 is disposed in the hollowed cavity of capacitor core 3.

FIG.8 and FIG.8a show a third preferred embodiment of the present invention, which is based on the second preferred embodiment, in this embodiment, a first cover 61 is inserted on the top of the casing 1, the first leading-out 21 and the second leading-out 22 both run through the first cover 61.

FIG.10 and FIG.10a show a forth embodiment of the present invention, the self-healing capacitor with safety protection means comprises:
a casing 1 which is made of flame retardant plastic or metal;
a capacitor core 3 wound with metallized polypropylene film is encapsulated in the casing 1;
flame retardant epoxy resin 5 is filled between the capacitor core 3 and the casing 1;
a first electrical contact 31 and a second electrical contact 32 are respectively provided on the upper end and the lower end of the capacitor core 3, the second electrical contact 32 is electrically connected to a current fuse 4 which is electrically connected to a second leading-out 22, and the first electrical contact 31 is electrically connected to a first leading-out 21.

Besides, the first electrical contact 31 is connected to a discharge resistance 7, two electrodes of the discharge resistance 7 are respectively connected to the first electrical contact 31 and the second electrical contact 32, a second cover 62 is inserted on the top of the casing 1, the first leading-out 21 and the second leading-out 22 both run through the second cover 62.

The invention has the following advantages: it adopts the mini current fuse 4 for the protection which accurately fits with the capacity current and will operate normally in the test and normal condition. At the moment that the capacitor core 3 comes up with severe self-healing discharge or thermal breakdown in the operation, the current fuse 4 will burn out immediately and break the power supply circuit of the capacitor core 3 due to the instant impulse current. Therefore, it can avoid explosions and accidents arising caused by the enlargement of the failure point, and errors will not occur due to the changes of the temperature in the operation. The current fuse will only operate for protection at the instant when an error occurs inside the capacitor which damages the insulation and increases the current.

The current fuse 4 is for the protection of the capacitor, which is low in the cost of raw material and supplement material and manufacture, simple in the craftsmanship, convenient in the operation, agile in the action and response, and rapid in the protection. It is a brand new capacitor combining energy conservation, environmental friendliness, and core technologies, suitable for mass production. Moreover, general technicians' operation will never deviate from the contents of the core technologies and affect the quality of the capacitor.

## Claims

1. A self-healing capacitor with safety protection means, the capacitor comprising:
a casing (1) which is made of flame retardant plastic or metal;
a capacitor core (3) wound with metallized polypropylene film encapsulated in the casing (1), the capacitor core (3) being composed of a hollowed left semicircular column (33) and a hollowed right semicircular column (34), whereby the capacitor core (3) is wholly in the form of a hollowed column;
a first electrical contact (31) and a second electrical contact (32) provided on the upper end and the lower end of the capacitor core (3) respectively, the first electrical contact (31) being formed on top of the left semicircular column (33) and the second electrical contact (32) being formed on the bottom of the right semicircular column (34), the first electrical contact (31) being electrically connected to a first leading-out (21);
a current fuse (4) electrically connected to the second electrical contact (32) and a second leading out (22); and
two electrodes of a discharge resistance (7) connected to the first electrical contact (31) and the second electrical contact (32);
**characterised in that** flame retardant epoxy resin (5) is filled between the capacitor core (3) and the casing (1);
the current fuse (4) is disposed in the hollowed cavity of capacitor core (3); and
a cover (62) is inserted on the top of the casing (1), the first leading-out (21) and the second leading-out (22) both running through the cover (62).

2. The self-healing capacitor of claim 1, wherein a second cover (61) is inserted on the top of the casing (1), the first leading-out (21) and the second leading-out (22) both running through the second cover (61).

## Patentansprüche

1. Selbstreparierender Kondensator mit Sicherheitsschutzmitteln, wobei der Kondensator umfasst:
ein Gehäuse (1) aus flammenhemmendem Kunststoff oder Metall;
einen Kondensatorkern (3), welcher mittels metallisierter Polypropylenfolie umwickelt ist, welche im Gehäuse (1) eingekapselt ist, wobei der Kondensatorkern (3) aus einer ausgehöhlten linken halbkreisförmigen Kolonne (33) und einer ausgehöhlten rechten halbkreisförmigen Kolonne (34) gebildet ist, wodurch der Kondensatorkern (3) insgesamt die Form einer ausgehöhlten Kolonne erhält;
einen ersten elektrischen Kontakt (31) und einen zweiten elektrischen Kontakt (32), welche jeweils auf dem oberen und unteren Ende des Kondensatorkerns (3) bereitgestellt sind, wobei der erste elektrische Kontakt (31) auf der Oberseite der linken halbkreisförmigen Kolonne (33) und der zweite elektrische Kontakt (32) auf dem Boden der rechten halbkreisförmigen Kolonne (34) gebildet ist, wobei der erste elektrische Kontakt (31) elektrisch mit einem ersten Ausgangsdraht (21) verbunden ist;
eine Stromsicherung (4), welche elektrisch mit dem zweiten elektrischen Kontakt (32) und einem zweiten Ausgangsdraht (22) verbunden ist; und
zwei Elektroden eines Entladungswiderstandes (7), welcher mit dem ersten elektrischen Kontakt (31) und dem zweiten elektrischen Kontakt (32) verbunden ist;
**dadurch gekennzeichnet, dass** zwischen dem Kondensatorkern (3) und dem Gehäuse (1) ein flammenhemmendes Epoxydharz (5) eingefüllt ist;
die Stromsicherung (4) in dem ausgehöhlten Innenraum des Kondensatorkerns (3) angeordnet ist; und
eine Abdeckung (62) auf der Oberseite des Gehäuses (1) eingeführt ist, wobei der erste Ausgangsdraht (21) und der zweite Ausgangsdraht (22) beide durch die Abdeckung (62) laufen.

2. Selbstreparierender Kondensator nach Anspruch 1, wobei eine zweite Abdeckung (61) auf der Oberseite des Gehäuses (1) eingeführt ist, wobei der erste Ausgangsdraht (21) und der zweite Ausgangsdraht (22) beide durch die zweite Abdeckung (61) laufen.

## Revendications

1. Condensateur autoréparable avec moyen de protection de sécurité, ledit condensateur comprenant :
un boîtier (1) réalisé en plastique à combustion lente ou en métal ;
un noyau de condensateur (3) enroulé dans un film polypropylène métallisé encapsulé dans le boîtier (1), le noyau de condensateur (3) étant composé d'une colonne semi-circulaire gauche creuse (33) et d'une colonne semi-circulaire droite creuse (34), grâce à quoi le noyau de condensateur (3) est entièrement sous la forme d'une colonne creuse ;
un premier contact électrique (31) et un deuxième contact électrique (32) fournis sur l'extrémité supérieure et l'extrémité inférieure du noyau de condensateur (3) respectivement, le premier contact électrique (31) étant formé sur le dessus de la colonne semi-circulaire gauche (33) et le deuxième contact électrique (32) étant formé sur le fond de la colonne semi-circulaire droite (34), le premier contact électrique (31) étant électriquement raccordé à un premier fil sortant (21) ;
un fusible (4) électriquement raccordé au deuxième contact électrique (32) et à un deuxième fil sortant (22) ; et
deux électrodes d'une résistance de décharge (7) raccordées au premier contact électrique (31) et au deuxième contact électrique (32) ;
**caractérisé en ce qu'**une résine époxy à combustion lente (5) est versée entre le noyau de condensateur (3) et le boîtier (1) ;
le fusible (4) est fourni dans la cavité creuse du noyau de condensateur (3) ; et
un couvercle (62) est inséré sur le dessus du boîtier (1), le premier fil sortant (21) et le deuxième fil sortant (22) passant tous deux à travers le couvercle (62).

2. Condensateur autoréparable selon la revendication 1, dans lequel un deuxième couvercle (61) est inséré sur le dessus du boîtier (1), le premier fil sortant (21) et le deuxième fil sortant (22) passant tous deux à travers le deuxième couvercle (61).
